# EUROPÄISCHE PATENTSCHRIFT

(11) **EP 1 307 703 B1**
(45) Veröffentlichungstag und Bekanntmachung des Hinweises auf die Patenterteilung: **03.10.2007**
(21) Anmeldenummer: 01958056.2
(22) Anmeldetag: 06.08.2001
(51) Int. Cl.: G01B 21/26, G01B 5/255, B60B 31/02

(54) **VERFAHREN UND VORRICHTUNG ZUM ZENTRIEREN EINES RADES**
METHOD AND DEVICE FOR CENTRING A WHEEL
PROCEDE ET DISPOSITIF POUR CENTRER UNE ROUE

(30) Priorität: 07.08.2000 DE 10039553; 05.04.2001 DE 10118802
(43) Veröffentlichungstag der Anmeldung: 07.05.2003
(73) Patentinhaber: Lie, Peter, 20257 Hamburg (DE)
(72) Erfinder: Lie, Peter, 20257 Hamburg (DE)
(74) Vertreter: Schneider, Henry
(86) Internationale Anmeldenummer: PCT/EP2001/009067
(87) Internationale Veröffentlichungsnummer: WO 2002/012829

(56) Entgegenhaltungen:
- DE-A- 19 745 179
- FR-A- 2 355 675
- US-A- 4 417 237
- US-A- 5 103 414

## Beschreibung

Die Erfindung betrifft ein Verfahren und eine Vorrichtung zum Zentrieren eines Rades mit den in den Oberbegriffen der Ansprüche 1 und 2 genannten Merkmalen.

Es ist bekannt, den Seitenschlag und Höhenschlag an einem Rad mit einer als Zentrierhilfe dienenden Vorrichtung zu kompensieren. Dabei wird das zu prüfende Rad in eine Halterung der Zentrierhilfe eingespannt und in Drehung versetzt. Über geeignete Messeinrichtungen werden die Beträge des axialen und radialen Ausschlages der Felge des Rades erfasst. Anschließend werden durch Drehen der Speichennippel des Rades der Seitenschlag und der Höhenschlag kompensiert. Es ist allgemein üblich, als Messeinrichtungen Messuhren zu verwenden. Nachteilig hierbei ist, dass die Messuhren jeweils nur den momentanen Betrag des Seiten- und Höhenschlages anzeigen, so dass bei der Korrektur des Seiten- und Höhenschlages mehrere Umdrehungen des Rades notwendig sind, wenn man die maximalen Abweichungen ermitteln will, um so bei der Korrektur zielgerichtet vorgehen zu können. Andererseits haben Messuhren, deren Anzeigegenauigkeit im Bereich von 0,01 mm liegt, den Nachteil, dass bei der Erfassung der axialen und radialen Abweichungen der Felge eines Rades mehrere Umdrehungen ihres Zeigers stattfinden. Das hat zur Folge, dass zur Ermittlung von Messwerten in der Regel die Anzahl der Umdrehungen des Zeigers der Messuhr gezählt werden muss. Der gesamte Vorgang bei der Erfassung der Messwerte ist dadurch insbesondere zeitaufwendig und verlangt ein hohes Maß an Konzentration und Sorgfalt von der ausführenden Person, da diese sich die Anzahl der Umdrehungen stets merken muss. Schließlich können sich bei diesem Vorgang leicht Fehler bei der Erfassung der Messwerte ergeben, was eine Korrektur der Abweichungen in axialer und radialer Richtung erschwert und zusätzliche Zeit erfordert.

Aus der DE 43 20 585 A1 ist eine Fahrradzentrierhilfe bekannt, die aus einer am Rahmen beziehungsweise an der Gabel eines Fahrrades anbringbaren Spannvorrichtung und einem Schwenkarm, der einerends mit der Spannvorrichtung und anderenends mit einer Messuhr derart dreh- und schwenkbar verbunden ist, dass der Messstift der Messuhr an die auszumessende Felge anlegbar ist, besteht. Bei dieser bekannten Fahrradzentrierhilfe ist nachteilig, dass diese mit relativ hoher Ungenauigkeit arbeitet. Da durch die Befestigung an einem Rahmenteil des Fahrrades kein Bezug zu einer Lagerung der zu zentrierenden Felge besteht, ist insbesondere dann, wenn die Felge nicht exakt eingespannt ist, mit einem nur unzureichenden Zentrierergebnis zu rechnen.

Der Erfindung liegt daher die Aufgabe zugrunde, ein Verfahren und eine Vorrichtung der eingangs genannten Art zu schaffen, die auf einfache Weise ein schnelles und genaues Zentrieren des Rades ermöglichen.

Diese Aufgabe wird durch ein Verfahren und eine Vorrichtung mit den in den unabhängigen Ansprüchen 1 und 2 genannten Merkmalen gelöst. Dadurch, dass gemäß dem Verfahren das Rad in eine Radhalterung eingespannt wird, das Rad gedreht wird, wobei aus einer vollen Umdrehung des Rades der maximale linke und rechte Seitenschlag der Felge als Messwert erfasst wird, der Messwert des linken (beziehungsweise rechten) maximalen Seitenschlages der Felge vorzeichenbehaftet registriert wird, wobei dem Messwert links von der Nullposition ein negatives Vorzeichen und dem Messwert rechts von der Nullposition ein positives Vorzeichen zugeordnet wird, das Rad um 180° gedreht eingespannt wird, aus einer vollen Umdrehung des Rades der maximale linke und rechte Seitenschlag der Felge als Messwert erfasst wird, der erste linke (beziehungsweise rechte) maximale Seitenschlag und der zweite rechte (beziehungsweise linke) maximale Seitenschlag der Felge voneinander abgezogen werden, der Wert, der sich aus dem vorangegangenen Schritt ergibt, durch 2 geteilt und dem so erhaltenen Wert ein positives Vorzeichen zugeordnet wird, der Wert, der sich aus dem vorangegangenen Schritt ergibt, vom zweiten rechte (beziehungsweise linken) maximalen Seitenschlag der Felge abgezogen wird, das Rad gedreht wird, bis der mittlere Zeiger des Zeigerwerkes auf den aus dem vorangegangenen Schritt ermittelten Wert zeigt, am Justierrad des Zeigerwerkes gedreht wird, bis der mittlere Zeiger auf Null zeigt, nach einer vollen Umdrehung des Rades durch die beiden Schleppzeiger des Zeigerwerkes der maximale linke und rechte Seitenschlag der Felge angezeigt werden, das Rad gedreht wird, bis der mittlere Zeiger des Zeigerwerkes einen der beiden Schleppzeiger erreicht hat, der den maximalen linken (beziehungsweise rechten) Seitenschlag der Felge anzeigt, der Seitenschlag in an sich bekannter Weise durch Drehen der Speichennippel korrigiert wird, indem die vom Zeigerwerk angezeigte Speiche über den Speichennippel gespannt oder gelockert wird, das Spannen oder das Lockern der Speichen, ausgehend vom Bereich des maximalen linken und rechte Seitenschlages der Felge, nacheinander in wechselnder Folge und in mindestens zwei Schritten, bei entsprechender Anzahl der Umdrehungen des Rades, bis hin zum Bereich des minimalen linken und rechten Seitenschlages vorgenommen wird, und nach einer bevorzugten Ausgestaltung der Erfindung anschließend aus einer vollen Umdrehung des Rades jeweils der maximale Höhenschlag der Felge nach innen und außen in Form der Abweichung vom Kreis jeweils als Messwert erfasst wird, die Null des Zeigerwerkes zwischen diese Messwerte gesetzt wird, der Höhenschlag der Felge in an sich bekannter Weise durch Drehen der Speichennippel korrigiert wird, indem die vom Zeigerwerk angezeigte Speiche über den Speichennippel gespannt oder gelockert wird, das Spannen oder das Lockern der Speichen, ausgehend vom Bereich des maximalen Höhenschlages der Felge nach innen und außen, nacheinander in wechselnder Folge und in mindestens zwei Schritten, bei entsprechender Zahl der Umdrehungen des Rades; jeweils bis hin zum Bereich des minimalen Höhenschlages der Felge nach innen und außen vorgenommen wird und während des Korrigierens des Höhenschlages der Seitenschlag der Felge kontrolliert und gegebenenfalls korrigiert wird.

Im Sinne der Erfindung ist auch, dass zur Ermittlung der Mittellage der Felge von dem zweiten rechten (beziehungsweise linken) maximalen Seitenschlag der erste linke (beziehungsweise rechte) maximale Seitenschlag abgezogen wird, der Wert, der sich aus dem vorangegangenen Schritt ergibt, durch zwei geteilt wird, so dass man den mit Vorzeichen versehenen Abstand des zweiten rechten (beziehungsweise linken) maximalen Seitenschlages zur Mitte der Radachse erhält. Anschließend wird das Rad gedreht; bis der mittlere Zeiger den zweiten rechten (beziehungsweise linken) maximalen Seitenschlag zeigt. Dann wird am Justierrad des Zeigerwerkes gedreht, bis der mittlere Zeiger auf den aus dem vorangegangenen Schritt ermittelten Wert zeigt. Die übrigen Schritte erfolgen wie vorstehend erläutert. Durch diese Vorgehensweise wird erreicht, dass auch bei willkürlicher Anfangseinstellung der Messuhr alle vorkommenden Fälle zur Ermittlung der Mittellage der Felge abgedeckt werden können.

Als weitere Alternative zum Beseitigen des Seitenschlages kann vorgesehen sein, dass das Rad gedreht wird, bis der mittlere Zeiger den größeren Wert vom linken und rechten maximalen Seitenschlag - als dem absoluten maximalen Seitenschlag - erreicht. Der sich an dieser Stelle befindende Speichennippel wird gedreht, bis der mittlere Zeiger ungefähr die Hälfte von dem absoluten maximalen Seitenschlag anzeigt. Nachfolgend gibt es wieder einen absoluten maximalen Seitenschlag bei der nächsten Radumdrehung, der aber einen kleineren Wert aufweist als der vorherige beseitigte maximale Seitenschlag. Dieser Vorgang wird wiederholt, bis der Seitenschlag in erforderlichem Maße minimiert ist.

In analoger Vorgehensweise kann für die Beseitigung des Höhenschlages vorgesehen sein, dass das Rad gedreht wird, bis der mittlere Zeiger den absoluten maximalen Höhenschlag erreicht. Der sich an dieser Stelle befindende Speichennippel wird gedreht, bis der mittlere Zeiger ungefähr die Hälfte von dem absoluten maximalen Höhenschlag anzeigt. Der hierzu benachbarte Speichennippel wird gedreht, bis der aus dem vorherigen Drehen entstandene Höhenschlag minimiert ist. Nachfolgend wird der nächste absolute maximale Höhenschlag durch erneutes Drehen des Rades ermittelt, der jedoch einen kleineren Wert als der zuvor ermittelte Höhenschlag besitzt. Dieser Vorgang wird in entsprechender Anzahl wiederholt, bis der absolute maximale Höhenschlag im erforderlichen gewünschten Maße minimiert ist.

Die Vorrichtung umfasst erfindungsgemäß als Messeinrichtungen wenigstens ein, vorzugsweise zwei in ihrem Grundaufbau gleiche Zeigerwerke, die vorzugsweise lösbar am Zentrierständer befestigt sind, von denen ein Zeigerwerk der Erfassung des Seitenschlages und ein Zeigerwerk der Erfassung des Höhenschlages der Felge des Rades dient, und in beiden Zeigerwerken jeweils eine axial verschiebbare Taststange gelagert ist, die mit einem um eine Schwenkachse schwenkbaren Übertragungsmechanismus derart in Verbindung steht, dass ihre axiale Verschiebebewegung spielfrei in eine Schwenkbewegung eines mittleren Zeigers umsetzbar ist, wobei der mittlere Zeiger jeweils mit einem linken Schleppzeiger und einem rechten Schleppzeiger in Verbindung steht, durch die bei der Prüfung des Seitenschlages der Felge des Rades der maximale Seitenschlag der Felge nach links und nach rechts und bei der Prüfung des Höhenschlages der Felge der maximale Höhenschlag der Felge nach innen und außen jeweils separat erfassbar ist, und dass der mittlere Zeiger an einem um die Schwenkachse schwenkbaren Halterahmen befestigt ist, innerhalb dessen zwei parallel zueinander beabstandete Führungen angeordnet sind, in denen ein kugelförmiges Übertragungsteil beidseitig geführt ist, wird auf einfache Weise ein schnelles und genaues Zentrieren des Rades ermöglicht. Das genaue Ermitteln der Mittellage und Sollebene des Rades schafft dabei die verfahrensmäßigen Voraussetzungen für ein zielgerichtetes und genaues Zentrieren des Rades. Beim Zentrieren kann in einzelnen Schritten ein exaktes Angleichen der Felge an deren Sollebene vorgenommen werden. Das dem erfindungsgemäßen Zeigerwerk zugrunde liegende Lösungsprinzip ermöglicht eine vergrößerte Anzeige der Beträge des Seiten- und Höhenschlages des Rades. Mit dem erfindungsgemäßen Zeigerwerk wird gleichzeitig ein großer und übersichtlicher Anzeigebereich der Abweichungen des Rades in einem Schwenkbereich des Zeigers von weniger als 180° geschaffen. Mit den Schleppzeigern können die maximalen Ausschläge des mittleren Zeigers jeweils nach links und nach rechts angezeigt und erfasst werden. Dadurch kann beim Zentrieren in vorteilhafter Weise von den Bereichen der maximalen Abweichungen der Felge vorgegangen und diese zielgerichtet in ihre Sollebene gebracht werden.

In bevorzugter Ausgestaltung der Erfindung ist vorgesehen, dass ein Spannverschluss zur Aufnahme einer Nabe des zu justierenden Rades selbstjustierend ausgebildet ist. Dadurch wird vorteilhaft erreicht, dass das zu justierende Rad eine exakte, reproduzierbare Position einnimmt. Diese ist erforderlich, damit während des durchzuführenden Zentrierverfahrens das Rad jeweils eine eindeutig bestimmte, definierte Zentrierposition - auch nach dem erfindungsgemäß vorgesehenen Drehen des Rades - einnimmt. Durch die selbstjustierende Ausbildung wird dies in einfacher Weise erreicht. Insbesondere, wenn der Spannverschluss zwei parallel zueinander beabstandet angeordnete Aufnahmeelemente umfasst, die jeweils eine Aufnahmenut besitzen, die vorzugsweise eine 2-Punkt-Lagerung für die Nabe ausbilden, lässt sich eine exakte Positionierung des Rades erreichen. Die 2-Punkt-Auflage garantiert eine reproduzierbare, definierte Position der Nabe und somit des Rades.

In weiterer bevorzugter Ausgestaltung der Erfindung ist vorgesehen, dass jedes der Aufnahmeelemente ein Arretierelement umfasst, das vorzugsweise verriegelbar ist. Hierdurch wird vorteilhaft erreicht, dass eine in die Aufnahmenut der Aufnahmeelemente eingelegte Nabe eines Rades durch das Arretierelement in ihrer Position gehalten wird, so dass auch während des bestimmungsgemäßen Einsatzes der Zentriervorrichtung die einmal eingenommene Position beibehalten wird. Das Arretierelement bildet vorzugsweise eine 1-Punkt-Lagerung für die Nabe aus, so dass diese insgesamt durch eine 3-Punkt-Lagerung fixiert ist. Hierdurch wird eine exakt definierte Positionierung der Nabe und somit des Rades möglich.

Weitere bevorzugte Ausgestaltungen der Erfindung ergeben sich aus den übrigen, in den Unteransprüchen genannten Merkmalen.

Die Erfindung wird nachfolgend in Ausführungsbeispielen anhand der zugehörigen Zeichnungen näher erläutert. Es zeigen:
- Figur 1: eine schematische Seitenansicht eines Zentrierständers mit je einem Zeigerwerk zur Erfassung des Seitenschlages und einem Zeigerwerk zur Erfassung des Höhenschlages;
- Figur 2: eine schematische Perspektivansicht eines Zeigerwerkes im teilweise demontierten Zustand;
- Figur 3: eine schematische Schnittdarstellung eines Zeigerwerkes;
- Figur 4: eine schematische Vorderansicht eines Zeigerwerkes;
- Figur 5: eine Prinzipdarstellung der Umsetzung einer axialen Verschiebebewegung der Taststange in eine Schwenkbewegung des Zeigers, wobei der Zeiger in der senkrechten Ausgangsposition sich befindet;
- Figur 6: eine Prinzipdarstellung der Umsetzung einer axialen Verschiebebewegung der Taststange in eine Schwenkbewegung des Zeigers, wobei der Zeiger in einer um einen Winkel geschwenkten Position sich befindet.
- Figur 7: ein Ausführungsbeispiel einer Taststangenführung;
- Figur 8: eine Perspektivansicht eines Spannverschlusses und
- Figuren 9 und 10: den Spannverschluss in einer Aufnahmeposition und in einer Arretierungsposition.

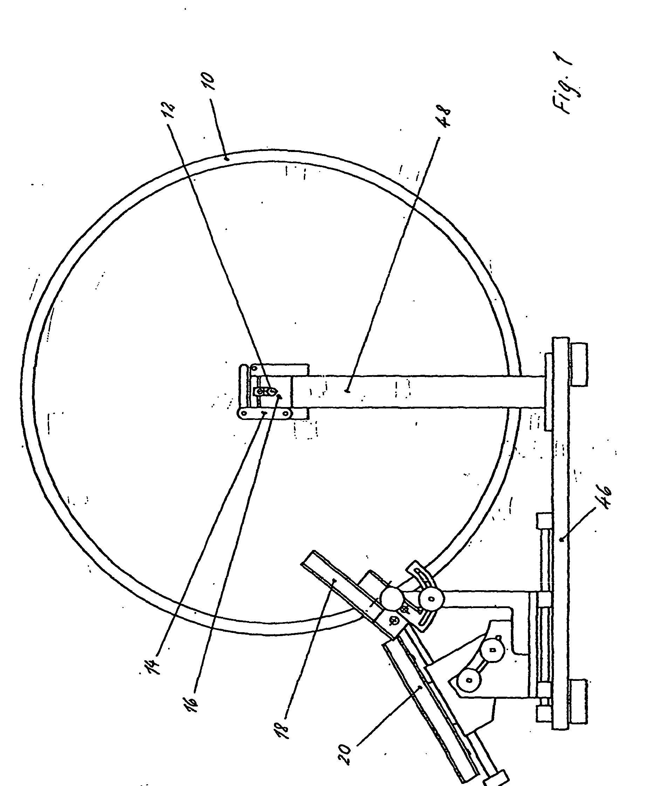

Die Figur 1 zeigt einen Zentrierständer 46 mit einem Rahmen 48 zur Aufnahme des zu zentrierenden Rades. Der Rahmen 48 trägt eine Radhalterung 16, in welche die Nabe eines Rades eingespannt ist. Dabei wird die Lage der Achse 12 des Rades durch einen Spannverschluss 14 genau fixiert. Am Zentrierständer 46 sind jeweils ein Zeigerwerk 18 zur Erfassung des Seitenschlages und ein Zeigerwerk 20 zur Erfassung des Höhenschlages der Felge 10 des Rades befestigt. Im Sinne der Erfindung ist auch, wenn auch nur ein Zeigerwerk 18 oder 20 vorgesehen ist, so dass die Vorrichtung beispielsweise nur zur Kompensation des Seitenschlages oder des Höhenschlages einsetzbar wäre. Beide Zeigerwerke 18, 20 sind baugleich, jedoch entsprechend dem Verwendungszweck in unterschiedlichen Positionen zur Felge 10 des Rades angeordnet. Die Befestigung der Zeigerwerke 18, 20 am Gestell des Zentrierständers 46 ist so ausgeführt, dass die Positionen der Zeigerwerke 18, 20 relativ zur Felge 10 des Rades veränderbar sind und somit der Seitenschlag und Höhenschlag von Rädern mit unterschiedlichen Felgendurchmessern und -breiten kontrolliert werden kann.

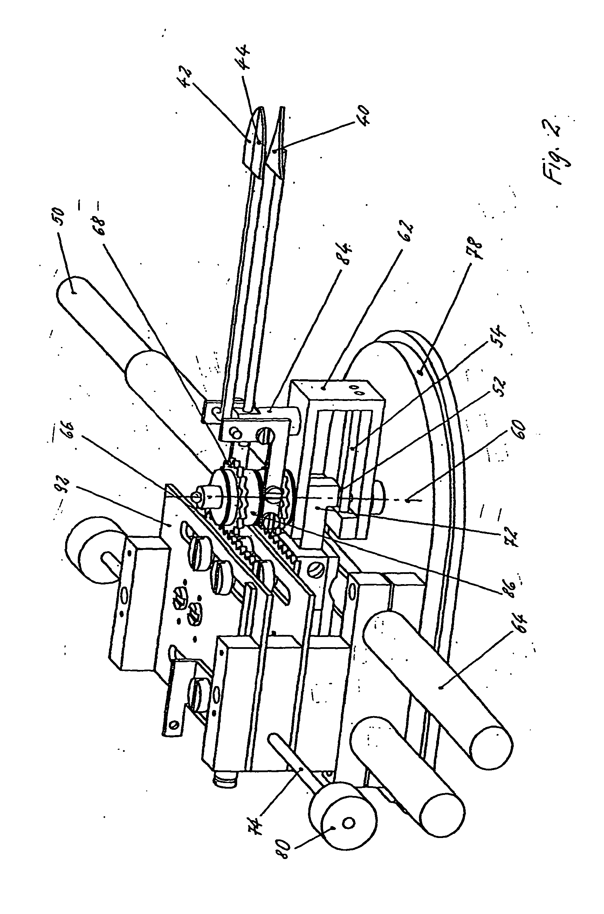

In der Figur 2 ist ein Zeigerwerk 18, 20 im teilweise demontierten Zustand dargestellt. In einem Gehäuse 78 des Zeigerwerkes 18, 20 ist eine axial verschiebbare Taststange 50 innerhalb einer Führungshülse 64 gelagert. Zur Erfassung des Seiten- und Höhenschlages der Felge 10 werden die Taststangen 50 der Zeigerwerke 18, 20 jeweils in axialer und radialer Richtung in direkten Kontakt mit der Felge 10 des Rades gebracht. Beim Drehen des Rades führen die Taststangen 50 in Abhängigkeit von den axialen und radialen Abweichungen der Felge 10 Verschiebebewegungen aus. Die Taststange 50 steht jeweils über ein Aufnahmeteil 72 mit einem um eine Schwenkachse 60 schwenkbaren Halterahmen 62 in Verbindung. Das Aufnahmeteil 72 steht einerseits mit der Taststange 50 in Verbindung, so dass es die axiale Verschiebebewegung zusammen mit der Taststange 50 ausführt. Andererseits nimmt das Aufnahmeteil 72 ein kugelförmiges Übertragungsteil 52 auf, das beidseitig spielfrei in einer Führung eines Halterahmens 62 gelagert ist. Gemäß einer bevorzugten Ausgestaltung der Erfindung ist vorgesehen, dass zwei parallel beabstandete zylindrische Stifte 54 die beidseitige Führung des kugelförmigen Übertragungsteiles 52 bilden. Auf dem Halterahmen 62 ist an einem Stehbolzen 84 der mittlere Zeiger 40 befestigt, der zusammen mit dem Halterahmen 62 die Schwenkbewegung um die Schwenkachse 60 nach links oder nach rechts ausführt. Der mittlere Zeiger 40 steht jeweils mit einem linken Schleppzeiger 42 und einem rechten Schleppzeiger 44 in Verbindung. Die Schleppzeiger 42, 44 sind jeweils an einem Lagerring 86 befestigt, der um die Schwenkachse 60 drehbar gelagert ist. Mit dem Stehbolzen 84, an dem der mittlere Zeiger 40 befestigt ist, haben die Schleppzeiger 42, 44 beidseitig davon unmittelbaren Kontakt. Dadurch führen beide Schleppzeiger 42, 44 zusammen mit dem mittleren Zeiger 40 jeweils die Schwenkbewegung nach links und nach rechts aus und bleiben dann in der Position des größten Ausschlages des mittleren Zeigers 40 nach links und nach rechts stehen. Dadurch können in vorteilhafter Weise bei der Prüfung des Seitenschlages der Felge 10 der maximale Seitenschlag nach links und nach rechts und bei der Prüfung des Höhenschlages der Felge 10 der maximale Höhenschlag der Felge 10 nach innen und außen separat erfasst werden. Nach dem Erfassen des maximalen Seitenschlages der Felge 10 in beide Richtungen sowie des maximalen Höhenschlages der Felge 10 nach innen und nach außen können die Schleppzeiger 42, 44 auf einfache Weise in ihre Ausgangslage gebracht werden. Eine bevorzugte Ausgestaltung der Erfindung sieht hierzu vor, dass die Schleppzeiger 42, 44 jeweils über einen Zahntrieb mit einer Verschiebeeinheit 92 in Verbindung stehen, an der eine Zugstange 74 befestigt ist. Gemäß einer weiteren bevorzugten Ausgestaltung der Erfindung besteht der Zahntrieb aus einer Zahnstange 66 und einem Zahnrad 68. Die Zugstange 74 weist an ihrem Ende zur besseren Handhabung einen Bedienknopf 80 auf. Durch manuelles Betätigen der Zugstange 74 können die Schleppzeiger 42, 44 in ihre ursprüngliche Position geschwenkt werden.

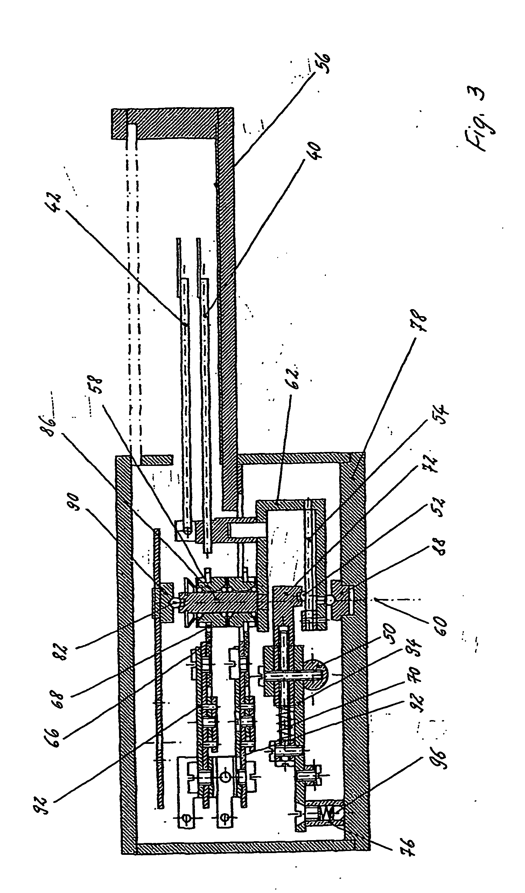

In der Figur 3 ist das Zeigerwerk 18, 20 mit dem Mechanismus zur Umsetzung einer axialen Verschiebebewegung der Taststange 50 in eine Schwenkbewegung des mittleren Zeigers 40 dargestellt. Das Zeigerwerk 18, 20 wird von einem Gehäuse 78 umschlossen, wobei das Zifferblatt 56 mit einer durchsichtigen Scheibe abgedeckt ist. Innerhalb des Gehäuses 78 sind ein unteres Lagerteil 88 und ein oberes Lagerteil 90 angeordnet, die jeweils eine Kugel 82 aufnehmen. Die Kugeln 82 befinden sich auf der Schwenkachse 60, um die der Halterahmen 62 mit den Zeigern 40, 42 und 44 schwenkbar gelagert ist. Der Halterahmen 62 trägt zentrisch zur Schwenkachse 60 einen Lagerbolzen 58, um den koaxial zwei Lagerringe 86 drehbeweglich angeordnet sind. An den Lagerringen 86 sind jeweils der linke Schleppzeiger 42 und der rechte Schleppzeiger 44 befestigt. Beide Lagerringe 86 stehen über einen Zahntrieb, bestehend aus Zahnrad 68 und Zahnstange 66 mit einer Verschiebeeinheit 92 in Verbindung. An der Verschiebeeinheit 92 ist jeweils eine Zugstange 74 (nicht dargestellt) befestigt, mit der manuell der linke Schleppzeiger 42 und der rechte Schleppzeiger 44 in ihre Ausgangslage gebracht werden können.

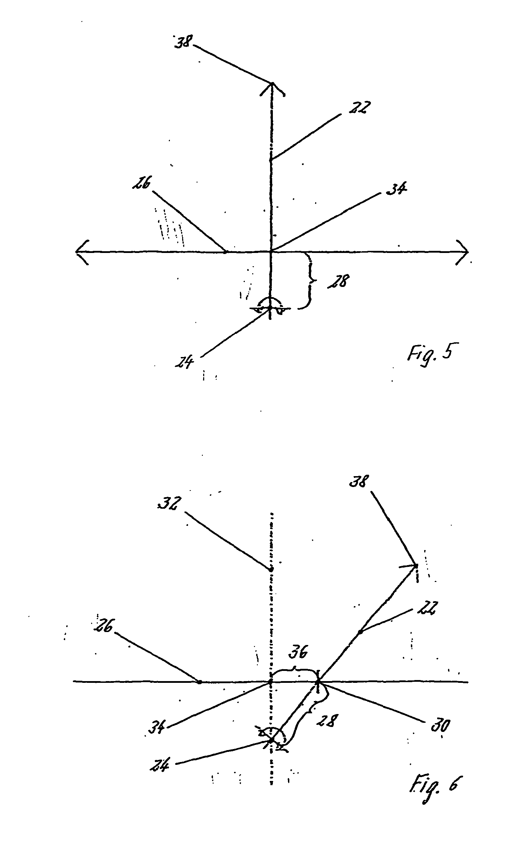

Der Halterahmen 54 nimmt zwei parallel zueinander angeordnete Führungen auf. Gemäß einer bevorzugten Ausgestaltung der Erfindung werden die Führungen durch zwei beabstandete zylindrische Stifte 54 gebildet. Zwischen den zylindrischen Stiften 54 befindet sich ein übertragungsteil 52, das durch diese spielfrei geführt wird. Gemäß einer bevorzugten Ausgestaltung der Erfindung hat das Übertragungsteil 52 die Form einer Kugel. Das übertragungsteil 52 wird von einem Aufnahmeteil 72, das mit der Taststange 50 in Verbindung steht, gehalten und überträgt so direkt die Bewegung der Taststange 50 auf den Halterahmen 62. Das Übertragungsteil 52 hat einen variablen Abstand 28 (Figuren 5 und 6) zur Schwenkachse 60. In der Ausgangsstellung (Nullposition) des mittleren Zeigers 40 ist der Abstand 28 am geringsten. Mit zunehmendem Schwenkwinkel des Halterahmens 62 vergrößert sich der Abstand 28 des Übertragungsteiles 52 zur Schwenkachse 60. Durch die Kraft einer Druckfeder 70 wird dabei das Aufnahmeteil 72 verschoben, wobei das damit verbundene Übertragungsteil 52 zwischen den zylindrischen Stiften 54 eine Längsbewegung ausführt. Die Druckfeder 70 stützt sich in einer Halterung einer Trägerplatte 94 ab, die mit der Taststange 50 und dem Halterahmen 62 in Verbindung steht. Die Trägerplatte 94 steht in ihrem Ende über eine innerhalb einer Lagerbuchse 76 angeordnete und durch die Kraft einer Feder beaufschlagte Lagerkugel 96 mit dem Gehäuse 78 in Kontakt.

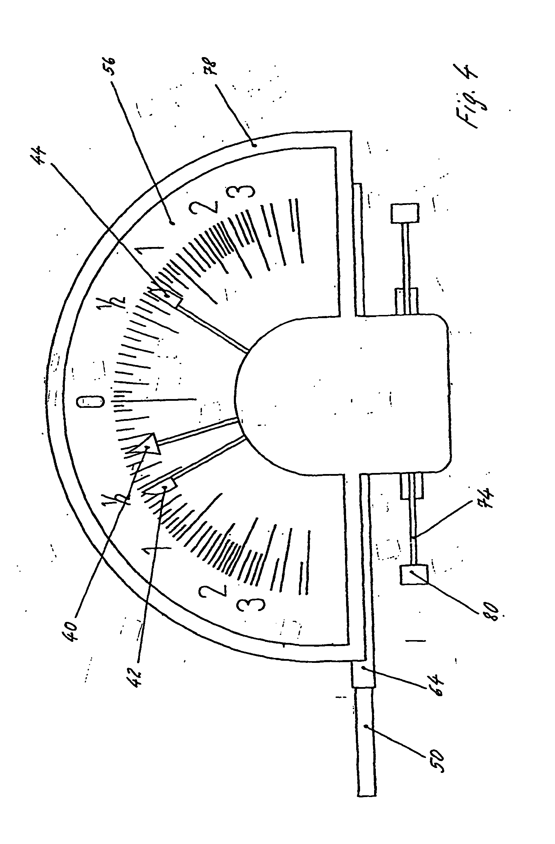

Ein erfindungsgemäßes Zeigerwerk 18, 20 ist schematisch in Figur 4 dargestellt. Durch die auf dem Zifferblatt 56 des Zeigerwerkes 18, 20 vorhandene Skala kann in übersichtlicher Weise jeweils der Seitenschlag und der Höhenschlag der Felge 10 eines Rades erfasst werden. Ein besonderer Vorteil der Erfindung besteht darin, dass der maximale Schwenkwinkel des mittleren Zeigers 40 kleiner als 180° ist. Ein weiterer entscheidender Vorteil der Erfindung wird dadurch erreicht, dass die Schleppzeiger 42 und 44 jeweils den maximalen Betrag des Seitenschlages nach links und rechts und des Höhenschlages nach innen und außen der Felge 10 des Rades anzeigen. Vorteilhafterweise entspricht dabei die Richtung der Schwenkbewegung der Zeiger 40, 42 und 44 auch der Richtung der axialen Verschiebung der Taststange 50, so dass für den Ablesenden kein Umdenken notwendig ist.

Anhand der Figuren 5 und 6 wird das Prinzip, das dem erfindungsgemäßen Zeigerwerk 18, 20 zugrunde liegt, erläutert. Die Figuren zeigen einen Hebel 22, der durch das Einwirken einer Kraft auf der Bahn 26 um den Drehpunkt 24 schwenkbar ist. Die Figur 5 zeigt dabei den Hebel 22 in seiner Ausgangslage (Nullposition). In der Figur 6 ist der Hebel 22 um einen bestimmten Winkelbetrag um den Drehpunkt 24 geschwenkt dargestellt. Die Senkrechte 32, die die Bahn 26 im Schnittpunkt 34 schneidet, stellt die Ausgangslage (Nullposition) des Hebels 22 dar. Aus beiden Figuren ist deutlich erkennbar, dass beim Schwenken des Hebels 22 der Abstand 28 vom Schwenkpunkt 24 zum Kraftübertragungspunkt 30 mit zunehmendem Schwenkwinkel des Hebels 22 sich vergrößert. Das hat zur Folge, dass bei einer Zunahme der Strecke 36, die den Abstand des Kraftübertragungspunktes 30 zum Schnittpunkt 34 bildet, der Winkelbetrag der Schwenkbewegung des Hebels 22 sich verringert. Der Abstand 28 wird dabei mit zunehmendem Schwenkwinkel des Hebels 22 größer. Auf das erfindungsgemäße Zeigerwerk 18, 20 bezogen, stellt der Hebel 22 den Halterahmen 62 mit dem daran befestigten mittleren Zeiger 40 dar. Der Drehpunkt 24 ist beim Zeigerwerk 18, 20 die Schwenkachse 60, um die der Halterahmen 62 mit dem Zeiger 40 schwenkbar ist. Die Taststange 50 wird in axialer Richtung auf der Bahn 26 bewegt und steht im Kraftübertragungspunkt 30 mit dem Halterrahmen 62 in Verbindung. Die Verbindung wird durch das in einer Führung 54 des Halterahmens 62 verschiebbare Obertragungsteil 52 hergestellt. Die Hebelspitze 38 ist beim Zeigerwerk 18, 20 die Spitze des Zeigers 40. Gemäß dem genannten Lösungsprinzip wird jeder Strecke 36 ein Schwenkwinkel des mittleren Zeigers 40 zugeordnet, wobei die Zuordnung mittels eines Referenzmessgerätes und mathematischer Gleichungen vorzunehmen ist. So kann in vorteilhafter Weise die Skalierung auf dem Zifferblatt 56 des Zeigerwerkes 18, 20 mit hoher Genauigkeit erfolgen.

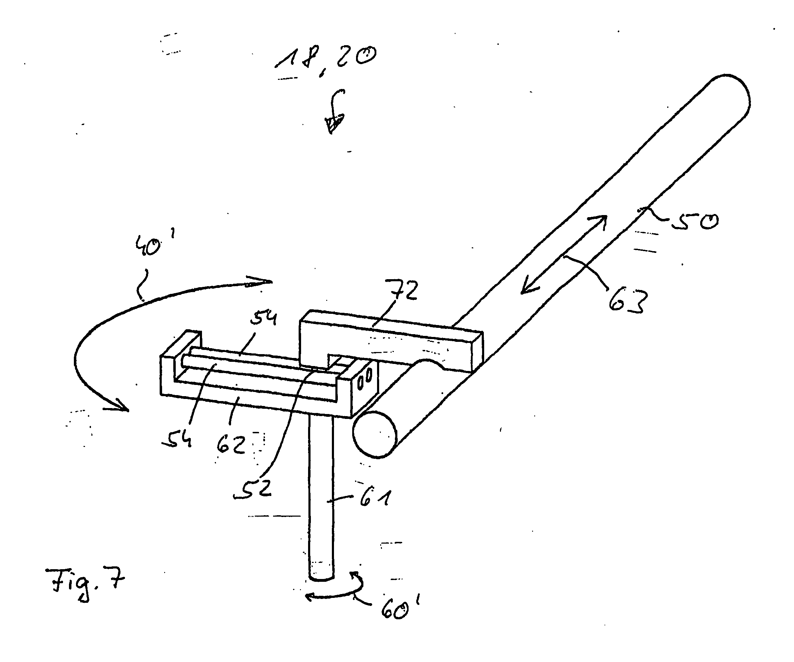

Figur 7 zeigt einen besonders einfachen Aufbau eines Zeigerwerkes, und zwar im Bereich der Führung einer Taststange 50. Die Taststange 50 ist kraftschlüssig mit einem Aufnahmeteil 72 verbunden, über das die Taststange 50 mit dem schwenkbaren Halterahmen 62 in Verbindung steht. Der Halterahmen 62 weist die parallel beabstandet zueinander angeordneten zylindrischen Stifte 54 auf, die zur Ausbildung einer Führung für das kugelförmige Übertragungsteil 52 führen. Der Halterahmen 62 ist starr mit einem Bolzen 61 verbunden, der die hier angedeutete Schwenkbewegung 60' (um die Schwenkachse 60 in Figur 2) ausführen kann.

Durch die in Figur 7 angedeutete Verstellbarkeit (Doppelpfeil 63) der Taststange 50, entweder zur Einstellung des Seitenschlages oder des Höhenschlages, wird das Aufnahmeteil 72 in die gleiche Richtung gedrängt. Da der Halterahmen 62 über den Bolzen 61 zwar drehbar, jedoch ortsfest angeordnet ist, wird diese Bewegung (Doppelpfeil 63) in die Schwenkbewegung 60' des Halterahmens 62 und somit in einen hier angedeuteten Zeigerausschlag 40' umgesetzt.

Der wesentliche Vorteil der Erfindung besteht darin, einen großen Messbereich abzudecken, wobei eine genaue Anzeige um die Nullposition erreicht wird, wie es beim Zentrieren von Rädern benötigt wird. Die gesamte Schwenkbewegung des mittleren Zeigers 40 findet auf einem übersichtlichen Halbkreis statt. Die maximalen Ausschläge des mittleren Zeigers 40 nach links und nach rechts werden vorteilhafterweise jeweils durch den linken Schleppzeiger 42 und rechten Schleppzeiger 44 angezeigt.

Das erfindungsgemäße Verfahren zum Zentrieren eines Rades läuft in nachfolgend genannten Schritten ab. Zunächst wird das Rad mit seiner Nabe in eine Radhalterung 16 eines Zentrierständers 46 eingespannt. Danach wird das Rad gedreht, wobei aus einer vollen Umdrehung des Rades jeweils der maximale linke und rechte Seitenschlag der Felge 10 als Messwert erfasst wird. Der Messwert des linken (beziehungsweise rechten) maximalen Seitenschlages der Felge 10 wird vorzeichenbehaftet registriert. Dabei wird dem Messwert links von der Nullposition ein negatives Vorzeichen und dem Messwert rechts von der Nullposition ein positives Vorzeichen zugeordnet. Nachdem das Rad um 180° gedreht in der Radhalterung 16 des Zentrierständers 46 eingespannt wurde, wird erneut aus einer vollen Umdrehung des Rades jeweils der maximale linke und rechte Seitenschlag der Felge 10 als Messwert erfasst. Anschließend werden der linke (beziehungsweise rechte) maximale Seitenschlag und der zweite rechte (beziehungsweise linke) maximale Seitenschlag der Felge 10 voneinander abgezogen. Der Wert, der sich aus dem vorangegangenen Schritt ergibt, wird dann durch 2 geteilt und dem so erhaltenen Wert ein positives Vorzeichen zugeordnet. Danach wird der Wert, der sich aus dem vorangegangenen Schritt ergibt, vom zweiten rechten (beziehungsweise linken) maximalen Seitenschlag der Felge 10 abgezogen. Danach wird das Rad gedreht, bis der mittlere Zeiger 40 des Zeigerwerkes 18 auf den aus dem vorangegangenen Schritt ermittelten Wert zeigt. Am Justierrad des Zeigerwerkes 18 wird gedreht, bis der mittlere Zeiger 40 auf Null zeigt. Das Zeigerwerk 18 zeigt mit der Positionierung des mittleren Zeigers 40 auf Null die Mitte der Achse 12 des Rades an. Danach kann der Seitenschlag der Felge 10 des Rades beseitigt werden.

Nach einer vollen Umdrehung des Rades werden durch die beiden Schleppzeiger 42, 44 des Zeigerwerkes 18 der maximale linke und rechte Seitenschlag der Felge 10 angezeigt. Das Rad wird gedreht, bis der mittlere Zeiger 40 des Zeigerwerkes 18 einen der beiden Schleppzeiger 42, 44 erreicht hat, der den maximalen linken (beziehungsweise rechten) Seitenschlag der Felge 10 anzeigt. Nun wird in an sich bekannter Weise durch Drehen der Speichennippel der Seitenschlag der Felge 10 korrigiert, indem die vom Zeigerwerk 18 angezeigte Speiche über den Speichennippel gelockert oder gespannt wird. Das Spannen oder das Lockern der Speichen wird, ausgehend vom Bereich des maximalen linken oder rechten Seitenschlages der Felge 10, nacheinander in wechselnder Folge und in mindestens zwei Schritten, bei entsprechender Anzahl der Umdrehungen des Rades, bis hin zum Bereich des minimalen linken und rechten Seitenschlages vorgenommen.

Anschließend wird aus einer vollen Umdrehung des Rades der maximale Höhenschlag der Felge 10 nach innen und außen in Form der Abweichung vom Kreis jeweils als Messwert erfasst und die Null des Zeigerwerkes 20 zwischen diese Messwerte gesetzt. Der Höhenschlag der Felge 10 wird nun in an sich bekannter Weise durch Drehen der Speichennippel korrigiert, indem die vom Zeigerwerk 20 angezeigte Speiche über den Speichennippel gespannt oder gelockert wird. Das Spannen oder das Lockern der Speichen wird, ausgehend vom Bereich des maximalen Höhenschlages der Felge 10, nach innen und außen, nacheinander in wechselnder Folge und in mindestens zwei Schritten, bei entsprechender Anzahl der Umdrehungen des Rades, bis hin zum Bereich des minimalen Höhenschlages der Felge 10 nach innen und außen vorgenommen. Während des Korrigierens des Höhenschlages wird der Seitenschlag der Felge 10 kontrolliert und gegebenenfalls korrigiert.

Figur 8 zeigt in einer schematischen Perspektivansicht einen Spannverschluss 14. Der Spannverschluss 14 umfasst zwei, im Wesentlichen parallel zueinander angeordnete Aufnahmeelemente 100. Die Aufnahmeelemente 100 umfassen ein Grundelement 102, das mit dem Zentrierständer 46 verbunden ist. Die Grundelemente 102 bilden jeweils eine Aufnahmenut 104 aus. Ferner trägt das Grundelement 102 eine Aufnahme 106 für ein Arretierelement 108. Die Aufnahme 106 ist fest mit dem Grundelement 102 verbunden, während das Arretierelement 108 um eine Drehachse 110 relativ zur Aufnahme 106 verschwenkbar ist.

Ferner ist am Grundelement 102 ein Verriegelungselement 112 über eine Drehachse 115 schwenkbeweglich gelagert. Das Verriegelungselement 112 bildet einen Feststellabschnitt 114 aus, von dem sich Lagerschenkel 116 erstrecken. Die Lagerschenkel 116 sind parallel zueinander angeordnet und bilden eine randoffene, schlitzartige Ausnehmung 118 aus. Eine Tiefe der Ausnehmung 118 ist so gewählt, dass diese - wie in Figur 1 erkennbar - das Arretierelement 108 aufnehmen kann. Durch den Feststellabschnitt 114 ist ein Feststellelement 120, beispielsweise eine Feststellschraube oder dergleichen, geführt. Das Feststellelement 120 besitzt ein Außengewinde, das mit einem Innengewinde des Feststellabschnittes 114 korrespondiert.

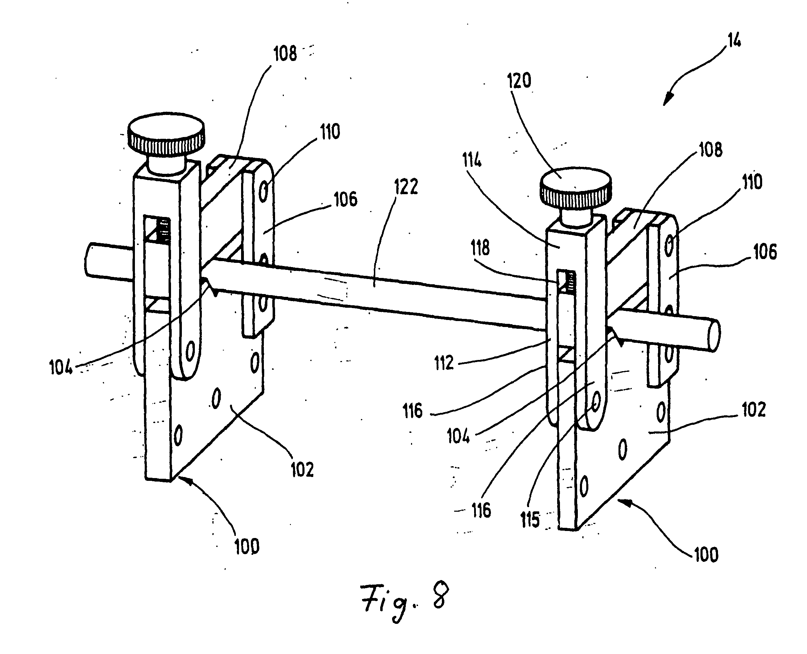

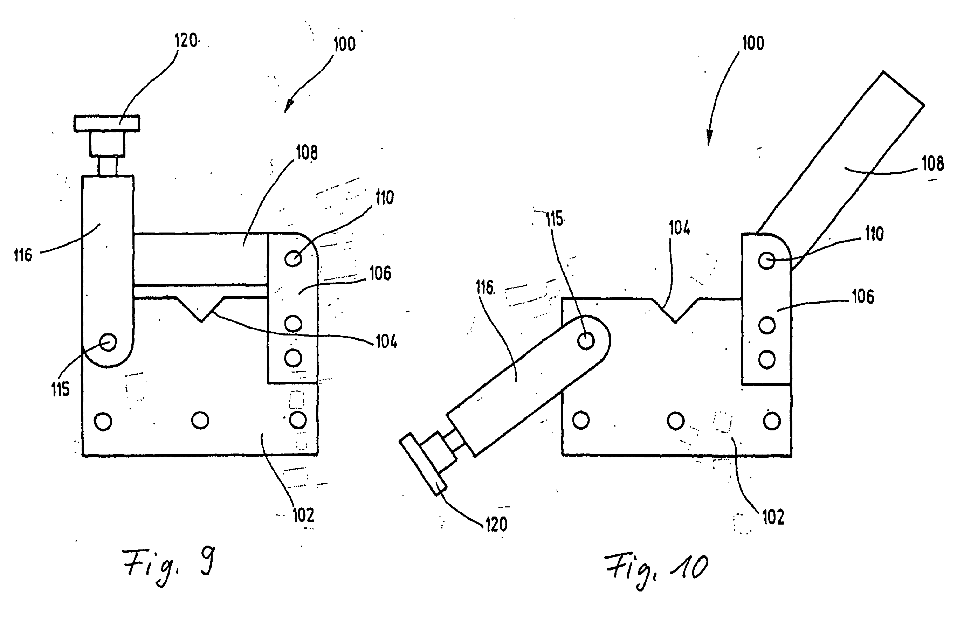

In den Figuren 9 und 10 ist jeweils ein Aufnahmeelement 100 in seiner Zentrierposition (Figur 9) und einer Aufnahmeposition (Figur 10) gezeigt. Gleiche Teile wir in Figur 1 sind mit gleichen Bezugszeichen versehen und nicht nochmals erläutert.

### Der Spannverschluss 14 zeigt folgende Funktion:

In der in Figur 10 gezeigten Aufnahmeposition wird die Nabe 122 (Figur 8) eines Rades in die Aufnahmenuten 104 eingelegt. Die Aufnahmenuten 104 werden von einer V-förmigen Vertiefung gebildet, so dass es zu einer 2-Punkt-Auflage der Nabe 122 in der Aufnahmenut 104 kommt. Nachdem die Nabe 122 eingelegt ist, wird das Arretierelement 108 um die Drehachse 110 verschwenkt, bis dieses auf der Nabe 122 aufliegt. Hierdurch wird eine zusätzliche 1-Punkt-Lagerung für die Nabe 122 realisiert, so dass diese insgesamt durch eine 3-Punkt-Lagerung gehalten ist. Das Arretierelement 108 kommt hierbei im Wesentlichen parallel zu einer Oberseite des Grundkörpers 102 des Aufnahmeelementes 100 zum Liegen. Anschließend wird das Verriegelungselement 112 um seine Drehachse 115 verschwenkt, so dass ein der Drehachse 115 abgewandtes Ende des Arretierelementes 108 in die Ausnehmung 118 eingreift. Durch Betätigen des Feststell-elementes 120 kann nunmehr die Nabe 122 in den Aufnahmeelementen 100 festgespannt werden. Diese besitzt somit eine feste, definierte, jederzeit reproduzierbare Position.

### BEZUGSZEICHENLISTE

- 10: Felge
- 12: Achse
- 14: Spannverschluss
- 16: Radhalterung
- 18: Zeigerwerk (für Seitenschlag)
- 20: Zeigerwerk (für Höhenschlag)
- 22: Hebel
- 24: Drehpunkt
- 26: Bahn
- 28: Abstand
- 30: Kraftübertragungspunkt
- 32: Senkrechte
- 34: Schnittpunkt
- 36: Strecke
- 38: Hebelspitze
- 40: mittlerer Zeiger
- 42: linker Schleppzeiger
- 44: rechter Schleppzeiger
- 46: Zentrierständer
- 48: Rahmen
- 50: Taststange
- 52: Übertragungsteil
- 54: zylindrischer Stift
- 56: Zifferblatt
- 58: Lagerbolzen
- 60: Schwenkachse
- 62: Halterahmen
- 64: Führungshülse
- 66: Zahnstange
- 68: Zahnrad
- 70: Druckfeder
- 72: Aufnahmeteil
- 74: Zugstange
- 76: Buchse
- 78: Gehäuse
- 80: Bedienknopf
- 82: Kugel
- 84: Stehbolzen
- 86: Lagerbuchse
- 88: unteres Lagerteil
- 90: oberes Lagerteil
- 92: Verschiebeeinheit
- 94: Trägerplatte
- 96: Lagerkugel
- 100: Aufnahmeelement
- 102: Grundelement
- 104: Aufnahmenut
- 106: Aufnahme
- 108: Arretierelement
- 110: Drehachse
- 112: Verriegelungselement
- 114: Feststellabschnitt
- 115: Drehachse
- 116: Lagerschenkel
- 118: Ausnehmung
- 120: Feststellelement
- 122: Nabe

## Patentansprüche

1. Verfahren zum Zentrieren eines Rades mit Nabe, Speichen und Felgen, insbesondere eines Rades eines Fahrrades, bei dem die Beträge des Seitenschlages der Felge des Rades maßlich erfasst und anschließend durch Drehen der Speichennippel der Seitenschlag der Felge des Rades beseitigt werden, **dadurch gekennzeichnet, dass**
a) das Rad mit seiner Nabe in eine Radhalterung eines Zentrierständers eingespannt wird,
b) das Rad gedreht wird, wobei aus einer vollen Umdrehung des Rades jeweils der maximale linke und rechte Seitenschlag der Felge (10) als Messwert erfasst wird,
c) der Messwert des linken beziehungsweise rechten maximalen Seitenschlages der Felge (10) vorzeichenbehaftet registriert wird, wobei dem Messwert links von der Nullposition ein negatives Vorzeichen und dem Messwert rechts von der Nullposition ein positives Vorzeichen zugeordnet wird,
d) das Rad um 180° gedreht Seitenvertauscht im Zentrierständer eingespannt wird,
e) aus einer vollen Umdrehung des Rades jeweils der maximale linke und rechte Seitenschlag der Felge (10) als Messwert erfasst wird,
f)der erste linke beziehungsweise rechte maximale Seitenschlag und der zweite rechte beziehungsweise linke maximale Seitenschlag der Felge (10) voneinander abgezogen werden,
g) der Wert, der sich aus Schritt f) ergibt, durch 2 geteilt und dem so erhaltenen Wert ein positives Vorzeichen zugeordnet wird,
h) der Wert, der sich aus Schritt g) ergibt, vom zweiten rechten beziehungsweise linken maximalen Seitenschlag der Felge (10) abgezogen wird,
i) das Rad an die Stelle gedreht wird, an der der im Schritt h) ermittelte Wert als Messwert angezeigt wird,
j) an der Radstellung entsprechend Schritt i) der angezeigte Messwert als Null-Wert gesetzt wird,
k) nach einer vollen Umdrehung des Rades der maximale linke und rechte Seitenschlag der Felge (10) ermittelt werden,
l) das Rad an die Stelle gedreht wird, an der der nach Schritt k) ermittelte maximale linke oder rechte Seitenschlag der Felge (10) angezeigt wird,
m) der Seitenschlag der Felge (10) in an sich bekannter Weise durch Drehen der Speichennippel korrigiert wird, indem an der im Schritt 1) ermittelten Stelle des maximalen linken oder rechten Seitenschlages die entsprechende Speiche über den Speichennippel gespannt oder gelockert wird und
n) das Spannen oder das Lockern der Speichen, ausgehend vom Bereich des maximalen linken und rechten Seitenschlages der Felge (10), nacheinander in wechselnder Folge und in mindestens zwei Schritten, bei entsprechender Anzahl der Umdrehungen des Rades, bis hin zum Bereich des minimalen linken und rechten Seitenschlages vorgenommen wird.

2. Verfahren nach Anspruch 1, **dadurch gekennzeichnet, dass**
a) anschließend aus einer vollen Umdrehung des Rades der maximale Höhenschlag der Felge (10) nach innen und außen in Form der Abweichung vom Kreis jeweils als Messwert erfasst wird,
b) zwischen diese Messwerte der Messwert als Null-Wert gesetzt wird,
c) der Höhenschlag der Felge (10) in an sich bekannter Weise durch Drehen der Speichennippel korrigiert wird, indem an der im Schritt a) ermittelten Stelle des maximalen Höhenschlages der Felge (10) nach innen und außen jeweils die entsprechende Speiche über den Speichennippel gespannt oder gelockert wird,
d) das Spannen oder das Lockern der Speichen, ausgehend vom Bereich des maximalen Höhenschlages der Felge (10), nach innen und außen, nacheinander in wechselnder Folge und in mindestens zwei Schritten, bei entsprechender Anzahl der Umdrehungen des Rades, bis hin zum Bereich des minimalen Höhenschlages der Felge (10) nach innen und außen vorgenommen wird und
e) während des Korrigierens des Höhenschlages der Seitenschlag der Felge (10) kontrolliert und gegebenenfalls korrigiert wird.

3. Vorrichtung zur Durchführung des Verfahrens nach Anspruch 1 oder 2, bestehend aus einem Zentrierständer mit einem Rahmen zur Aufnahme einer Nabe eines zu zentrierenden Rades und mit Messeinrichtungen für die Erfassung der Beträge des Seitenschlages und/oder des Höhenschlages der Felge des Rades, wobei die Messeinrichtungen an einem Gestell des Zentrierständers in unterschiedlichen Positionen zum Rad befestigbar sind, **dadurch gekennzeichnet, dass** als Messeinrichtungen am Zentrierständer (46) wenigstens ein, vorzugsweise zwei in ihrem Grundaufbau gleiche Zeigerwerke (18, 20) vorzugsweise lösbar befestigt sind, von denen ein Zeigerwerk (18) der Erfassung des Seitenschlages und ein Zeigerwerk (20) der Erfassung des Höhenschlages der Felge (10) des Rades dient, und in beiden Zeigerwerken (18, 20) jeweils eine axial verschiebbare Taststange (50) gelagert ist, die mit einem um eine Schwenkachse (60) schwenkbaren Halterahmen (62) derart in Verbindung steht, dass ihre axiale Verschiebebewegung spielfrei in eine Schwenkbewegung eines mittleren Zeigers (40) umsetzbar ist, wobei der mittlere Zeiger (40) jeweils mit einem linken Schleppzeiger (42) und einem rechten Schleppzeiger (44) in Verbindung steht, durch die bei der Prüfung des Seitenschlages der Felge (10) des Rades der maximale Seitenschlag der Felge (10) nach links und nach rechts und bei der Prüfung des Höhenschlages der Felge (10) der maximale Höhenschlag der Felge (10) nach innen und nach außen jeweils separat erfassbar ist, und dass der mittlere Zeiger (40) an dem um die Schwenkachse (60) schwenkbaren Halterahmen (62) befestigt ist, innerhalb dessen zwei parallel zueinander beabstandete Führungen angeordnet sind, in denen ein kugelförmiges Übertragungsteil (52) beidseitig spielfrei geführt ist.

4. Vorrichtung nach Anspruch 3, **dadurch gekennzeichnet, dass** innerhalb des schwenkbaren Halterahmens (62) in Form von zwei parallel zueinander beabstandeten Führungen zwei zylindrische Stifte (54) angeordnet sind.

5. Vorrichtung nach einem der Ansprüche 3 und 4, **dadurch gekennzeichnet, dass** das Übertragungsteil (52) die Form einer Kugel hat.

6. Vorrichtung nach einem der Ansprüche 3 bis 5, **dadurch gekennzeichnet, dass** die Schleppzeiger (42, 44) jeweils über einen Zahntrieb mit einer Verschiebeeinheit (92) in Verbindung stehen, an der eine Zugstange (74) befestigt ist.

7. Vorrichtung nach Anspruch 6, **dadurch gekennzeichnet, dass** der Zahntrieb aus einer Zahnstange (66) und einem Zahnrad (68) besteht.

8. Vorrichtung nach den Ansprüchen 6 und 7, **dadurch gekennzeichnet, dass** am Ende der Zugstange (74) ein Bedienknopf (80) zu deren manuellen Betätigung befestigt ist.

9. Vorrichtung nach einem der Ansprüche 3 bis 8, **dadurch gekennzeichnet, dass** ein Spannverschluss (14) zur Aufnahme einer Nabe des Rades selbstjustierend ausgebildet ist.

10. Vorrichtung nach Anspruch 9, **dadurch gekennzeichnet, dass** der Spannverschluss (14) zwei parallel zueinander beabstandet angeordnete Aufnahmeelemente (100) umfasst, die jeweils eine Aufnahmenut (104) besitzen.

11. Vorrichtung nach einem der Ansprüche 3 bis 10, **dadurch gekennzeichnet, dass** die Aufnahmenut (104) eine 2-Punkt-Lagerung für eine Nabe (122) ausbildet.

12. Vorrichtung nach einem der Ansprüche 3 bis 11, **dadurch gekennzeichnet, dass** jedes der Aufnahmeelemente (100) ein Arretierelement (108) umfasst.

13. Vorrichtung nach einem der Ansprüche 3 bis 12, **dadurch gekennzeichnet, dass** das Arretierelement (108) eine 1-Punkt-Lagerung für eine Nabe (122) ausbildet.

14. Vorrichtung nach einem der Ansprüche 3 bis 13, **dadurch gekennzeichnet, dass** das Arretierelement (108) verriegelbar ist.

15. Vorrichtung nach einem der Ansprüche 3 bis 14, **dadurch gekennzeichnet, dass** das Arretierelement (108) feststellbar ist.

## Claims

1. Method for centering a wheel having a hub, spokes and rims, in particular a wheel of a bicycle, in which the amounts of the wobble of the wheel rim are measured and subsequently the wobble of the wheel rim is eliminated by rotating the spoke nipples, **characterized in that**
a) the wheel is clamped at its hub in a wheel locating device of a centering stand;
b) the wheel is rotated, wherein from a full rotation of the wheel, the values of both the maximum left wobble and of the maximum right wobble of the rim (10) are measured;
c) the measured values of the left and right maximum wobble, respectively, of the rim (10) are recorded as signed values, wherein a negative sign is assigned to the measured value left of the zero point and a positive sign is assigned to the measured value right of the zero point;
d) the wheel is clamped in the centering stand in a reversed position that is turned by 180°;
e) from a full rotation of the wheel, the values of both the maximum left wobble and of the maximum right wobble of the rim (10) are measured;
f) the first left and right maximum wobble, respectively, and the second right and left maximum wobble, respectively, of the rim (10) are subtracted from each other;
g) the value resulting from step f) is divided by 2 and a positive sign is assigned to the value thus obtained;
h) the value resulting from step g) is subtracted from the second right and left maximum wobble, respectively, of the rim (10);
i) the wheel is rotated to the position in which the value determined in step h) is indicated as a measured value;
j) in the wheel position according to step i), the indicated measured value is set as a zero value;
k) after a full rotation of the wheel, the maximum left wobble and the maximum right wobble of the rim (10) are determined;
l) the wheel is rotated to the position in which the maximum left or right wobble of the rim (10) determined in step k) is indicated;
m) the wobble of the rim (10) is corrected in a manner known per se by rotating the spoke nipples, wherein in the position of the maximum left or right wobble determined in step 1), the corresponding spoke is tensioned or loosened via the spoke nipple; and
n) the spokes are tensioned or loosened starting from the range of the maximum left and right wobble of the rim (10), successively and alternately and in at least two steps, with the corresponding number of wheel rotations, up to the range of the minimum left and right wobble.

2. Method according to claim 1, **characterized in that**
a) subsequently, from a full rotation of the wheel, the values of both the maximum vertical runout inwards and the maximum vertical runout outwards of the rim (10) in the form of the deviation from the circle are measured;
b) between these measured values, the measured value is set as a zero value;
c) the vertical runout of the rim (10) is corrected in a manner known per se by rotating the spoke nipples, wherein in the position of the maximum vertical runout of the rim (10) inwards and outwards determined in step a), the corresponding spoke is tensioned or loosened via the spoke nipple;
d) the spokes are tensioned or loosened starting from the range of the maximum vertical runout of the rim (10) inwards and outwards, successively and alternately and in at least two steps, with the corresponding number of wheel rotations, up to the range of the minimum vertical runout of the rim (10) inwards and outwards; and
e) during the correction of the vertical runout, the wobble of the rim (10) is checked and, if necessary, corrected.

3. Apparatus for carrying out the method according to claim 1 or 2, consisting of a centering stand with a frame for holding a hub of a wheel to be centered and with measuring devices for measuring the amounts of the wobble and/or of the vertical runout of the wheel rim, wherein the measuring devices can be attached to a support of the centering stand in different positions relative to the wheel, **characterized in that** at least one, preferably two dial trains (18, 20) of the same basic construction are preferably detachably attached as measuring devices to the centering stand (46), of which dial trains (18, 20) one dial train (18) serves to detect the wobble and one dial train (20) serves to detect the vertical runout of the rim (10) of the wheel, and in each of the two dial trains (18, 20) there is supported an axially displaceable contact rod (50) that is connected to a holding frame (62) in such a manner that its axial displacement can be translated without any backlash into a swiveling movement of a middle pointer (40), said holding frame (62) swiveling about a swiveling axis (60), wherein the middle pointer (40) is connected to both a left trailing pointer (42) and a right trailing pointer (44), by means of which the maximum left and right wobble of the rim (10) can be separately detected during the check of the wobble of the rim (10) of the wheel and the maximum vertical runout of the rim (10) inwards and outwards can be separately detected during the check of the vertical runout of the rim (10), and that the middle pointer (40) is attached to the holding frame (62) swiveling about the swiveling axis (60), within which holding frame (62) there are arranged two guides running parallel to and being spaced apart from each other, in which a spherical transmission part (52) is guided backlash-free on both sides.

4. Apparatus according to claim 3, **characterized in that** within the swiveling holding frame (62), there are arranged two cylindrical pins (54) in the form of two guides running parallel to and being spaced apart from each other.

5. Apparatus according to any one of claims 3 and 4, **characterized in that** the transmission part (52) is spherical.

6. Apparatus according to any one of claims 3 to 5, **characterized in that** each of the trailing pointers (42, 44) is connected via a pinion gear to a displacing unit (92), to which a tie rod (74) is attached.

7. Apparatus according to claim 6, **characterized in that** the pinion gear consists of a toothed rack (66) and a toothed gear (68).

8. Apparatus according to claims 6 and 7, **characterized in that** an operating button (80) for the manual operation of the tie rod (74) is attached to the end of the tie rod (74).

9. Apparatus according to any one of claims 3 to 8, **characterized in that** a toggle-type fastener (14) for holding a hub of the wheel is formed as a self-adjusting fastener.

10. Apparatus according to claim 9, **characterized in that** the toggle-type fastener (14) comprises two locating members (100) running parallel to and being spaced apart from each other, each of them having a locating groove (104).

11. Apparatus according to any one of claims 3 to 10, **characterized in that** the locating groove (104) forms a two-point contact bearing for a hub (122).

12. Apparatus according to any one of claims 3 to 11, **characterized in that** each of the locating members (100) comprises a locking member (108).

13. Apparatus according to any one of claims 3 to 12, **characterized in that** the locking member (108) forms a one-point contact bearing for a hub (122).

14. Apparatus according to any one of claims 3 to 13, **characterized in that** the locking member (108) is lockable.

15. Apparatus according to any one of claims 3 to 14, **characterized in that** the locking member (108) is fixable.

## Revendications

1. Procédé pour le centrage d'une roue avec moyeu, rayons et jantes, en particulier d'une roue d'un vélo, par lequel les valeurs du voile latéral de la jante de la roue sont saisies conformes aux dimensions et ensuite le voile latéral de la jante de la roue est éliminé, par pivotement des écrous de rayon, **caractérisé en ce que**
a) la roue est bloquée par son moyeu dans une fixation de roue d'un support de centrage,
b) la roue est tournée, les voiles latéraux maximums gauche et droit de la jante (10) étant respectivement saisis comme valeurs de mesure à partir d'une rotation complète de la roue,
c) la valeur de mesure du voile latéral maximal gauche ou encore du voile latéral maximal droit de la jante (10) est enregistrée précédée d'un signe, un signe moins étant attribué à la valeur de mesure à gauche de la position zéro et un signe plus étant attribué à la valeur de mesure droite de la position zéro,
d) la roue, tournée à 180 °, est bloquée de façon renversée sur le support de centrage,
e) les voiles latérals maximums respectifs gauche et droit de la jante (10) sont saisis comme valeurs de mesure à partir d'une rotation complète de la roue,
f) le premier voile latéral maximal gauche ou encore le premier voile latéral maximal droit et le deuxième voile latéral maximal droit ou encore le deuxième voile latéral maximal gauche de la jante (10) sont soustraits l'un de l'autre,
g) la valeur qui résulte de l'étape f) est divisée par 2 et un signe plus est attribué à la valeur ainsi obtenue,
h) la valeur qui résulte de l'étape g) est soustraite du deuxième voile latéral maximal droit ou encore du deuxième voile latéral maximal gauche de la jante (10),
i) la roue est amenée par rotation à l'emplacement auquel la valeur déterminée à l'étape h) est affichée comme valeur de mesure,
j) à la position de roue correspondant à l'étape i), la valeur de mesure affichée est définie comme valeur zéro,
k) après une rotation complète de la roue, les voiles latéraux maximums gauche et droit de la jante (10) sont déterminés,
l) la roue est amenée par rotation à l'emplacement auquel le voile latéral maximal gauche ou le voile latéral maximums droit de la jante (10) déterminés d'après l'étape k) sont affichés,
m) le voile latéral de la jante (10) est corrigé par la rotation des écrous de rayon d'une manière en soit connue, en serrant ou desserrant par l'écrou de rayon le rayon correspondant, à l'emplacement déterminé à l'étape 1) du voile latéral maximal gauche ou du voile latéral maximal droit et
n) le serrage ou le desserrage des rayons, en partant de la zone des voiles latéraux maximums gauche et droit de la jante (10), sont exécutés l'un après l'autre alternativement et en au moins deux étapes, avec un nombre correspondant de rotations de la roue, jusqu'à la zone des voiles latéraux minimum gauche et droit.

2. Procédé selon la revendication 1, **caractérisé en ce que**
a) le voile radial maximums de la jante (10) vers l'intérieur et vers l'extérieur est ensuite saisi respectivement comme valeur de mesure sous forme d'écart du cercle, à partir d'une rotation complète de la roue,
b) la valeur de mesure est définie comme valeur zéro entre ces valeurs de mesure,
c) le voile radial de la jante (10) est corrigé d'une manière connue en soi, par la rotation des écrous de rayon, en serrant ou desserrant par l'écrou de rayon le rayon correspondant à l'emplacement déterminé à l'étape a) du voile radial maximal de la jante (10) vers l'intérieur et vers l'extérieur,
d) le serrage ou le desserrage des rayons, à partir de la zone du voile radial maximal de la jante (10) vers l'intérieur et vers l'extérieur, sont effectués l'un après l'autre alternativement et en au moins deux étapes, avec un nombre correspondant de rotations de la roue, jusqu'à la zone du voile radial minimum de la jante (10) vers l'intérieur et l'extérieur et
e) pendant la correction du voile radial, le voile latéral de la jante (10) est contrôlé et corrigé le cas échéant.

3. Dispositif pour l'exécution du procédé selon les revendications 1 ou 2, se composant d'un support de centrage avec un cadre pour l'accueil d'un moyeu d'une roue devant être centrée et avec des équipements de mesure pour la saisie des valeurs du voile latéral et/ou du voile radial de la jante de la roue, les équipements de mesure étant fixables sur un châssis du support de centrage dans diverses positions par rapport à la roue, **caractérisé en ce que,** comme équipements de mesure, au moins un, de préférence deux cadrans à aiguilles (18, 20), de construction de base semblable, sont fixés sur le support de centrage (46), de préférence de façon à pouvoir être ôtés, l'un des cadrans à aiguille (18) servant à la saisie du voile latéral et l'autre cadran à aiguille (20) servant à la saisie du voile radial de la jante (10) de la roue, et **en ce que** sur les deux cadrans à aiguille (18, 20) une tige de manipulation déplaçable (50) est montée respectivement, laquelle se trouve attachée à un cadre de fixation (62) pivotable autour d'un axe de pivotement (60) de telle sorte que sont mouvement de déplacement axial est convertissable sans jeu en un mouvement de pivotement d'une aiguille du milieu (40), l'aiguille du milieu (40) étant attachée respectivement à une aiguille témoin gauche (42) et à une aiguille témoin droite (44), par lesquelles, lors du contrôle du voile latéral de la jante (10) de la roue, le voile latéral maximums de la jante (10) vers la gauche et vers la droite peut être saisi et lors du contrôle du voile radial de la jante (10), le voile radial maximal de la jante (10) vers l'intérieur et vers l'extérieur peut être saisi, respectivement de façon séparée, et **en ce que** l'aiguille du milieu (40) est fixée au cadre de fixation (62) pivotable sur l'axe de pivotement (60), à l'intérieur duquel cadre deux guidages écartés parallèlement l'un de l'autre sont disposés, dans lesquels un élément de transfert sphérique (52) est mené sans jeu des deux côtés.

4. Dispositif selon la revendication 3, **caractérisé en ce que**, à l'intérieur du cadre de fixation (62) pivotable, deux tiges (54) cylindriques sont disposées sous la forme de deux guidages écartés parallèlement l'un de l'autre.

5. Dispositif selon l'une des revendications 3 et 4, **caractérisé en ce que** l'élément de transfert (52) a la forme d'une bille.

6. Dispositif selon l'une des revendications 3 à 5, **caractérisé en ce que** les aiguilles témoins (42, 44) se trouvent attachées respectivement par un engrenage à une unité de déplacement (92), à laquelle une tige de traction (74) est fixée.

7. Dispositif selon la revendication 6, **caractérisé en ce que** l'engrenage se compose d'une crémaillère (66) et d'une roue dentée (68).

8. Dispositif selon l'une des revendications 6 et 7, **caractérisé en ce qu'**un bouton de commande (80) est fixé à l'extrémité de la barre de traction (74), pour son actionnement manuel.

9. Dispositif selon l'une des revendications 3 à 8, **caractérisé en ce qu'**une fermeture à serrage (14) est formée de façon à être auto-ajustable pour l'accueil d'un moyeu d'une roue.

10. Dispositif selon la revendication 9, **caractérisé en ce que** la fermeture à serrage (14) comprend deux éléments d'accueil (100) disposés écartés parallèlement l'un de l'autre, lesquels possèdent respectivement une rainure d'accueil (104).

11. Dispositif selon l'une des revendications 3 à 10, **caractérisé en ce que** la rainure d'accueil (104) forme un logement en deux points pour un moyeu (122).

12. Dispositif selon l'une des revendications 3 à 11, **caractérisé en ce que** chacun des éléments d'accueil (100) comprend un élément d'arrêt (108).

13. Dispositif selon l'une des revendications 3 à 12, **caractérisé en ce que** l'élément d'arrêt (108) forme un logement en un point pour un moyeu (122).

14. Dispositif selon l'une des revendications 3 à 13, **caractérisé en ce que** l'élément d'arrêt (108) est verrouillable.

15. Dispositif selon l'une des revendications 3 à 14, **caractérisé en ce que** l'élément d'arrêt (108) est blocable.
